# EUROPEAN PATENT SPECIFICATION

(11) **EP 1 098 733 B1**
(45) Date of publication and mention of the grant of the patent: **24.04.2002**
(21) Application number: 99904102.3
(22) Date of filing: 14.01.1999
(51) Int. Cl.: B23Q 1/60, B65G 47/51

(54) **RELATIVE MOTION GENERATOR**
VORRICHTUNG ZUM ERZEUGEN RELATIVBEWEGUNGEN
GENERATEUR DE MOUVEMENT RELATIF

(30) Priority: 23.07.1998 US 121088
(43) Date of publication of application: 16.05.2001
(73) Proprietor: MINNESOTA MINING AND MANUFACTURING COMPANY, St. Paul, Minnesota 55133-3427 (US)
(72) Inventor: CORRIGAN, Thomas, R., Saint Paul, MN 55133-3427 (US)
(74) Representative: VOSSIUS & PARTNER
(86) International application number: US9900887
(87) International publication number: WO0005030

(56) References cited:
- GB-A- 275 410
- GB-A- 1 530 981
- US-A- 5 315 526

## Description

### Field of the Invention

The present invention is directed to a relative motion generator capable of dynamically varying a acceleration, velocity, displacement, dwell time and/or dwell location of a working region on a continuously moving line.

### Background of the Invention

Various indexing machines are known to provide rapid indexing of discrete parts between work stations with a relatively long dwell time at each work station. U.S. Patent No. 5,176,036 (Harris) discloses a parallel shaft indexing machine with cams that rotate a drive hub to move a chain wrapped around a sprocket gear mounted on a driven hub at a speed in a first direction, while simultaneously moving the driven hub in a direction opposite to the first direction, so that the chain is dwelled for approximately one-half of the rotation of the drive hub. During the dwell period, the motion of the chain due to rotation of the hub cancels out the translation of the hub. During the remainder of the rotation of the drive hub, these motions reinforce each other very rapidly, yet smoothly, accelerating the chain and moving the carrier to the next downstream work station. During subsequent rotations of the drive hub, the carrier is again dwelled adjacent to a work station. Other cam driven indexing machines are disclosed in U.S. Patent Nos. 5,176,240 (Harris); 5,170,546 (Harris); and 1,973,196 (Baker) (which represents the preamble of claim 1).

Cam driven indexing machines require accurate fabrication of two cams to drive the rotation and translation of the chain in a coupled manner. There is little or no freedom to change the relationship after the cams have been machined, without disassembling and installing new cams. Consequently, the indexing cycle (i.e., dwell time, displacement, chain velocity) cannot be controlled, nor can adjustments be made to correct for accumulation of errors. For example, if the indexing cycle is offby 0.254 millimeters (0.001 inch), after 1000 parts pass a work station, the chain will be misaligned with the workstation by 25.4 millimeters (1 inch).

Additionally, the translational motion caused by the cams is coupled to the rotational motion that drives the continuously moving line. Consequently, the continuously moving line is typically a chain or conveyor belt for part handling applications with sufficient structural integrity to withstand the rotational forces applied to it by the indexing machine. These devices are typically not suitable for handling web lines.

### Brief Summary of the Invention

The present invention is directed to a relative motion generator for dynamically changing a nominal motion of a working region on a continuously moving line. The relative motion generator is capable of dynamically varying a acceleration, velocity, displacement, dwell time and/or dwell location of a continuously moving line within a working region. The present relative motion generator is particularly suited for indexing the continuously moving line past one or more work stations. The continuously moving line may be either a conveyor belt of discrete components or a continuous web, with or without discrete components.

In one embodiment, the relative motion generator includes a slider assembly moveable along a translation path. First and second support members are mounted to the slider assembly and adapted to support the working region of the continuously moving line. A programmable actuator system is adapted to move the slider assembly along the translation path to generate a working region motion different from a nominal motion. The working region motion is the same as a nominal motion when the slider assembly is stationary relative to a fixed location. The translation path can be circular, linear or curvilinear.

The programmable actuator system is adapted to cycle the slider assembly along the translation path independent of movement of the continuously moving line. That is, the translational motion of the slider is decoupled from the movement of the continuously moving line. The support members may be stationary or rotating idlers. In one embodiment, the first and second support members are rotated by a drive mechanism that is independent from the translation motion.

The working region motion comprises at least one of a working region displacement, velocity or acceleration equal to a nominal line displacement, velocity or acceleration, respectively, when the slider assembly is stationary. The working region motion comprises at least one of a working region displacement, velocity or acceleration not equal to a nominal line displacement, velocity or acceleration, respectively, when the slider assembly is moving. In one embodiment, at least one of a working region displacement, velocity or acceleration varies between at least two cycles. In another embodiment, the working region motion comprises a dwell time. The dwell time may vary between at least two cycles. Depending on the line velocity and slider velocity, the velocity of the continuously moving line within the working region can be positive, negative, or zero.

In one embodiment, the working region motion is substantially zero relative to a fixed location during translation of the slider assembly. The working region motion is substantially zero relative to a fixed location when a slider assembly velocity is one half of a nominal line velocity in a direction opposite a nominal line direction.

In one embodiment, the continuously moving line includes index markers and the relative motion generator includes a sensor adapted to detect the index markers. In another embodiment, the index markers are located on discrete parts on the continuously moving line. The programmable actuator system utilizes the index markers to detect the precise location of the continuously moving line or discrete parts and to dynamically adjust the movement of the slider assembly in response to a signal from the sensor in a closed loop positioning system. The closed loop positioning system is particularly useful for dynamically varying the movement of the slider assembly to compensate for variations in the velocity of the continuously moving line or variations in the spacing between discrete parts on the continuously moving line.

In one embodiment, the slider velocity is adjusted so that sequential portions of the continuously moving line are intermittently positioned or indexed adjacent to work stations. In another embodiment, the slider velocity is dynamically adjusted so that sequential portions of the continuously moving line are positioned adjacent to less than all of the work stations. That is, the programmable actuator system can dynamically skip selected work stations, for example, if one of the work station malfunctions.

The present invention is also directed to a relative motion generator system including a continuously moving line and the relative motion generator in accordance with the present invention.

The present invention is also directed to a method for dynamically varying a nominal motion of a continuously moving line within a working region. The steps include supporting the working region of the continuously moving line on a first and second support mounted on a slider assembly; reciprocating the slider assembly along a translation path during a first cycle to generate a working region motion of the continuously moving line within the working region different from the nominal motion; and reciprocating the slider assembly along a translation path during a second cycle. The motion of the slider. during the first cycle is different from the motion of the slider during the second cycle. The first cycle may be different from the second cycle in terms of acceleration, velocity, displacement, dwell time, location of the dwell, or combinations thereof.

### Brief Description of the Several Views of the Drawing

Figure 1 is a conceptual illustration of the operation of the present relative motion generator.

Figures 2A -2C illustrate a relative motion generator in accordance with the present invention.

Figure 3 illustrates an alternate relative motion generator in accordance with the present invention.

Figures 4A and 4B illustrate a rotary relative motion generator in accordance with the present invention.

### Detailed Description of the Invention

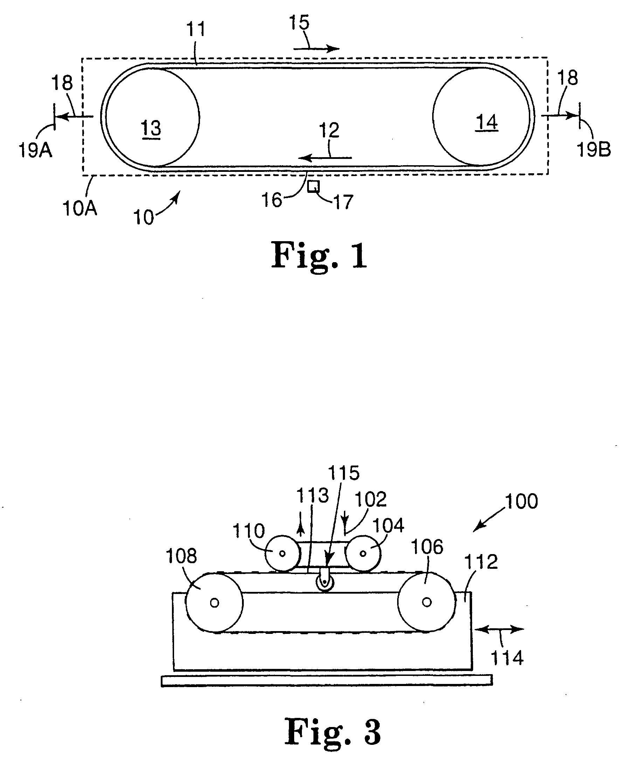

Figure 1 is a conceptual illustration of the operation of a relative motion generator 10 in accordance with the present invention. A continuously moving line 11 moves in a direction 12 around first and second support members 13, 14. The support members 13, 14 may either be stationary or rotating. If slider assembly 10A is stationary, the continuously moving line 11 has a nominal motion in working region 16 past fixed location 17 at a nominal line velocity V1 in a nominal line direction 12. Working region refers to the segment of the continuously moving line 11 that extends between the support members 12, 13 and is positioned opposite the fixed location 17 over a given time, or a subset thereof The portion of the continuously moving line 11 comprising the working region 16 changes over time.

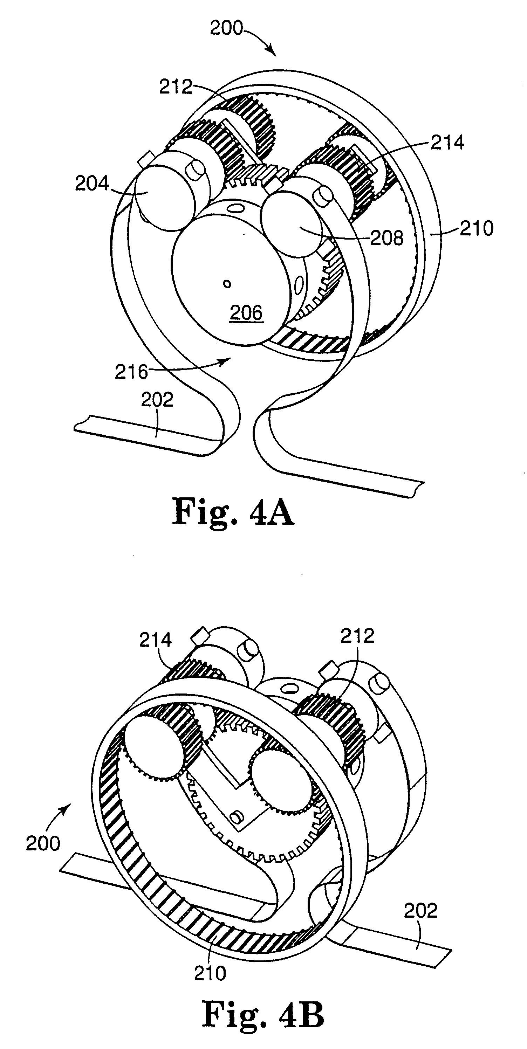

On the other hand, if slider assembly 10A is moved along translation path 18 in a direction 15, the working region 16 will exhibit a working region motion different from the nominal motion. The translation path 18 is parallel to the movement of the working region 16. Translation path refers to a fixed course of travel having a lower limit 19A and an upper limit 19B. Although Figure 1 illustrates the translation path 18 as linear, the translation path 18 may be curvilinear, circular or a variety of other shapes (see Figures 4A and 4B). Working region motion refers to the relative movement of the working region 16 with respect to the fixed location 17 in response to movement of the slider assembly 10A toward the upper limit 19B. Relative movement of the working region 16 with respect to the fixed location 17 in response to movement of the slider assembly 10A toward the lower limit 19A is referred to as the return motion.

For example, if the slider assembly 10A is moved along the translation path in the direction 15 at one half the velocity V1, then the working region 16 of the continuously moving line 11 will dwell or be stationary relative to the location 17 while the slider assembly 10A is moved. When the slider assembly 10A moves back toward the lower limit 19A, the continuously moving line 11 is advanced past the fixed location 17 at a rate greater than V1.

Movement of the slider assembly 10A along the translation path 18 is divided into a first portion in a direction toward the upper limit 19B and a second portion in a direction toward the lower limit 19A. One complete cycle involves reciprocating the slider assembly 10A first toward the upper limit 19B and then toward the lower limit 19A. Movement along the translation path may be the full distance from the lower limit 19A to the upper limit 19B and back again, or some lesser portion thereof. The displacement of the slider assembly 10A during the first portion of the displacement may be greater than, less than or equal to the displacement of the slider assembly 10A during the second portion.

In another embodiment, the slider assembly 10A can optionally be moved in a direction 15 at a velocity V2 that is less than half of the velocity V1. Consequently, the working region 16 of the continuously moving line 11 will move in the direction 12, but at a velocity less than V1, until the upper limit 19B is reached. When the slider assembly 10A reaches the upper limit 19B, it then moves back toward the lower limit 19A. During movement toward the lower limit, the working region 16 will move rapidly past the fixed location 17.

Similarly, the slider assembly 10A can optionally be moved in a direction 15 at a velocity V2 greater than one half of the velocity V1. Consequently, the working region 16 of the continuously moving line 11 will move in the direction 15, until the upper limit 19B is reached. When the slider assembly 10A reaches the upper limit 19B, it then moves back toward the lower limit 19A. During movement toward the lower limit, the working region 16 will move rapidly past the fixed location 17.

By controlling the displacement, velocity, and acceleration of the slider assembly 10A, the displacement, direction of travel, velocity, acceleration, dwell time and location of dwell of the working region 16 relative to the location 17 can be controlled. Moreover, the displacement, direction of travel, velocity, acceleration, dwelt time and location of dwell of the working region 16 relative to the location 17 can be controlled and can be changed from cycle to cycle. Finally, the motion of the slider assembly 10A is independent of the movement of the continuously moving line 11. Consequently, when the slider assembly 10A is stationary, the support members 13, 14 operate as idlers.

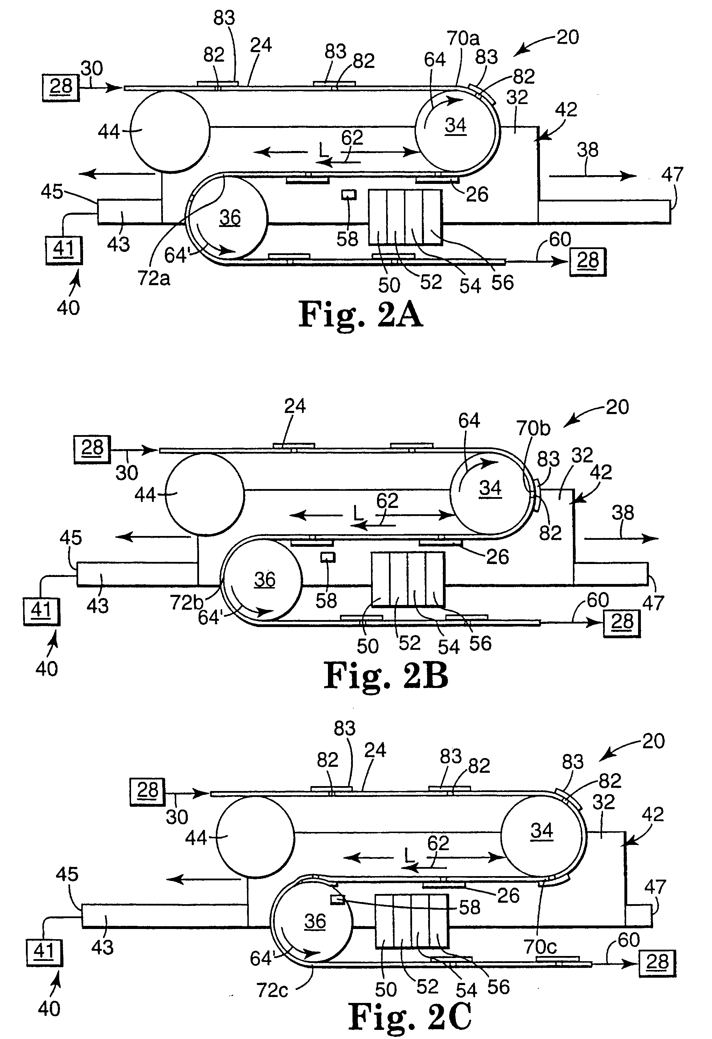

Figures 2A-2C schematically illustrate a relative motion generator 20 capable of dynamically changing a nominal motion 62 of a continuously moving line 24 in a working region 26. First and second support members 34, 36 support the continuously moving line 24 through the working region 26. Although the support members 34, 36 are illustrated as rotating, they may alternatively be stationary. In the illustrated embodiment, the working region 26 has length "L" defined by the gap between the first and second support members 34, 36. The continuously moving line 24 is supplied by a drive and tension control mechanism 28 at an input velocity 30. The working region 26 is a portion of the continuously moving line 24 supported between the support members 34, 36 during a given time interval. More particularly, the working region extends between the left most portion of the support member 34 and the right most portion of the support member 36. The first and second support members 34, 36 are mounted to a base plate 32 that is movable in a reciprocating motion along a translation path 38 by programmable actuator system 40. The translation path 38 has a lower limit 45 and an upper limit 47. Idler roll 44 is optionally attached to slider assembly 42 for supporting the continuously moving line 24.

The drive and tension control mechanism 28 imparts movement of the continuously moving line 24 independently from the translational movement of the slider assembly 24 along the translation path 38. By the nature of the geometry, the input velocity 30 of the continuously moving line 24 equals the output velocity 60. Additionally, the input velocity vector 30, the output velocity vector 60 and the translation path 38 are all parallel. The drive and tension control mechanism 28 may be any of a variety mechanisms suitable for conveying webs, such as films, scrims, woven fabrics, non-woven fabrics and the like that are easily deformed or damaged during handling. Consequently, the present relative motion generator 20 may be used with webs, as well as conventional conveyor belts, chain drives, part handling systems, and the like. In the embodiment where the continuously moving line 24 is a web, the web may include discrete parts either attached or formed integrally therewith.

The programmable actuator system 40 includes a programmable servo controller 41 and a reciprocating mechanism 43. The reciprocating mechanism 43 cycles slider assembly 42 back and forth along the translation path 38. The programmable controller 41 is capable of dynamically varying the movement of the slider assembly 42 from cycle to cycle, in terms of acceleration, velocity and displacement, resulting in variations in the working region motion of the continuously moving line 24 within the working region 26. The variations of the motion of the continuously moving line 24 within the working region 26 may include duration of dwell time, location of the dwell time, a velocity greater than or less than the nominal line velocity, and/or a direction of travel opposite to the nominal line movement. The reciprocating mechanism 43 of the programmable actuator system 40 may be a linear or rotary motor, rack and pinion system, pneumatic or hydraulic cylinders, or a variety of other mechanisms for displacing the slider assembly 42 along the translation path 38.

In one embodiment, a series of work stations 50, 52, 54, 56 are positioned opposite the working region 26 In the illustrated embodiment, the work stations 50, 52, 54, 56 are connected to ground. A sensor 58 is optionally located adjacent to the work stations 50, 52, 54, 56. The work stations 50, 52, 54, 56 can be used for splicing, coating operations, or assembly and packaging operations on individual parts on the continuously moving assembly system. Examples of assembly operations which require or are simplified by stationary motion include ultrasonic welding, the attachment of components, printing and manipulation of subcomponents.

When the slider assembly 42 is stationary, the support members 34, 36 operate as idler rolls so that the input velocity 30 equals the output velocity 60. The nominal motion 62 of the continuously moving line 24 within the working region 26 is in the same direction and at the same velocity as the rest of the continuously moving line 24. Nominal motion refers to the direction of travel and velocity of the continuous moving line 24 through the working region 26 when the slider assembly 42 is stationary.

Initial displacement of the slider assembly 42 along the translation axis 38 is illustrated in Figure 2B. The first support member 34 rotates in a clockwise direction 64. The second support members 36 rotate in a counterclockwise direction 64'. Location 70a on the continuously moving line 24 progresses around the first support member 34 to a location 70b. Location 72a on the continuously moving line 24 rotates counterclockwise around the second support member 36 to a location 72b. Figure 2C illustrates further displacement of the slider assembly 42 continues along the translation axis 38. The continuously moving line 24 continues around the support members 34, 36 to location 70c, 72c, respectively.

In the illustrated embodiment, the slider assembly 42 is displaced at a velocity of ½ the nominal line velocity 30, so that the working region 26 of the continuously moving line 24 is stationary or dwelled at the work stations 50, 52, 54, 56. Dwell refers to moving the slider assembly 42 so that the relative velocity of sequential portions of the continuously moving line relative to that location is substantially zero during movement of the slider assembly 42 toward the upper limit 47. When the slider assembly 42 reaches the end of its motion, it moves back toward the lower limit 45 to the position illustrated in Figure 2A. During this cycle, the continuously moving line 24 is indexed or moved forward by a distance determined by the cycle time and the line speed 30, 60.

In one embodiment, the continuously moving line 24 includes a series of index markers 82 that can be detected by sensor 58. The programmable actuator system 40 utilizes the signal from the sensor 58 to control the acceleration, velocity, displacement, dwell time and/or location of dwell of the working region 26 in a closed loop positioning system. Consequently, the motion of the continuously moving line 24 within the working region 26 can be adjusted dynamically to compensate for positioning errors or variations in the line velocity 30, 60.

In another embodiment, the continuously moving line 24 includes a series of articles 83 which can be worked on by any of the work stations 50, 52, 54, 56. The index markers 82 may alternately be located on the articles 83, rather than on the continuously moving line 24. Consequently, the programmable actuator system 40 can dynamically adjust the motion of the slider assembly 42 to compensate for variations in the spacing between the articles 83.

The ability to dynamically adjust the location and duration of dwell time gives the present relative motion generator 20 significant advantages over the prior cam driven systems. If an intermittent operation is being performed by several work stations 50, 52, 54, 56 on the continuously moving line 24, and one of those stations ceases to function, the programmable actuator system 40 can adapt dynamically and adjust the length of the intermittent motion to allow the system to continue operating with less than all of the work stations. For example, the programmable actuator system 40 may determine that one or more of the work stations 50, 52, 54, 56 is malfunctioning. Consequently, the translation of the slider assembly 42 can be dynamically adjusted so that the continuously moving line 24 skips that malfunctioning station(s) until repairs can be completed, while still operating the continuously moving line 24.

The programmable actuator system 40 can also vary the movement of the slider assembly 42 so that the movement of the continuously moving line 24 within the working region 26 is in a direction opposite the nominal motion 62. That is, the continuously moving line 24 can be moved backwards relative to the nominal motion 62. If the work stations are set up to perform operations on parts in the working region 26, a part could be moved from one station to the next, and then back to the preceding station. The relative motion generator 20 of the present invention can also be used to increase or decrease the velocity of the continuously moving line 24 through the working region 26 for particular operations, such as coating.

Figure 3 is a schematic illustration of an alternate relative motion generator 100 in which the continuously moving line 102 wraps around an idler roller 104 before engaging with the first support member 106. The continuously moving line 102 engages with the second support member 108 and a second idler 110. The first and second support members 106, 108 are mounted to the base plate 112 which reciprocates along the translation path 114, as discussed above. In the embodiment of Figure 3, the first and second support members 106, 108 are optionally connected by a drive belt 113 engaged with a drive mechanism 115. The drive mechanism 115 preferably synchronizes the rotation of the support members 106, 108 with the motion of the continuously moving line 102. Consequently, the continuously moving line 102 transmits little or no torque to the support members 106, 108.

Figures 4A and 4B are perspective views of a rotary version of the relative motion generator 200 in accordance with the present invention. The continuously moving line 202 traverses a first support member 204, an idler assembly 206, and a second support member 208. The first and second support members 204, 208 have gears which are engaged with an internal gear 210 The first and second support members 204, 208 also have a second gear 212, 214, respectively, engaged with the idler assembly 206 The idler assembly 206 is driven from ground to control the motion of the continuously moving line 202 in the working region 216. If the idler assembly 206 is driven at ½ the rotational velocity of the continuously moving line 202, the continuously moving line 202 will he stationary in the working region 216.

## Claims

1. A relative motion generator (10) for dynamically changing a nominal motion of a working region (16) on a continuously moving line (11) the relative motion generator (10) comprising:
a slider assembly (10A) moveable along a translation path (18),
a first support member (13) mounted to the slider assembly (10A) adapted to support the working region (16) of the continuously moving line (11),
a second support member (14) mounted to a slider assembly (10A) adapted to support the working region (16) of the continuously moving line (11), and **characterised in that** the generator (10) is further comprising
a positioning system adjusting the slider velocity in response to a signal representing either a position on the continuous line and/or a malfunction of a workstation, the positioning system comprising a programmable actuator system (40) adapted to move the slider assembly (10A) along the translation path (18) to generate a working region motion different from the nominal motion and a working region motion the same as a nominal motion when the slider assembly (10A) is stationary relative to a fixed location (17).

2. The relative motion generator of claim 1 wherein the working region motion comprises at least one of a working region displacement, velocity or acceleration.

3. The relative motion generator of claim 1 wherein the working region motion comprises at least one of a working region displacement, velocity or acceleration not equal to a nominal line displacement, velocity or acceleration, respectively, when the slider assembly is moving.

4. The relative motion generator of claim 1 wherein at least one of a working region displacement, velocity or acceleration varies between at least two cycles and wherein one back and forth movement of the slider assembly comprises one cycle.

5. The relative motion generator of claim 4 wherein the working region motion comprises a dwell time.

6. The relative motion generator of claim 1 wherein the working region motion is substantially zero relative to the fixed location during a first portion of translation of the slider assembly.

7. The relative motion generator of claim 1 further comprising:
at least one work station adjacent to the working region; and
means for adjusting the working region motion so that sequential portions of the continuously moving line are intermittently stationary adjacent to the working station.

8. The relative motion generator of claim 1 further comprising:
index markers located on one of the continuously moving line or articles on the continuously moving line;
a sensor adapted to detect the index markers; and
a closed loop positioning system for dynamically adjusting the slider velocity in response to a signal from the sensor.

9. The relative motion generator system comprising the relative motion generator of claim 1 and a continuously moving line which comprises at least one of a web, a conveyor belt, a part-handling system, or a chain-drive.

10. The relative motion generator of claim 1 wherein the positioning system is adapted to move the slider assembly along the translation path independently of the nominal motion, such that motion of the slider assembly along the translation path can differ during at least two cycles, wherein one back and forth movement of the slider assembly comprises one cycle.

11. A method for dynamically varying a nominal motion of a working region of a continuously moving line using the relative motion generator of claim 1, comprising the steps of:
supporting the working region of the continuously moving line on a first and a second support mounted to a slider assembly;
moving the slider assembly along a translation path during a first cycle to generate a working region motion of the working region different from the nominal motion of the continuously moving line, wherein one back and forth movement of the slider assembly comprises one cycle; and
holding the slider assembly stationary relative to a fixed location such that the working region motion is the same as a nominal motion.

12. The method of claim 11 further comprising the step of cycling the slider assembly along a translation path during a second cycle, the first cycle being different from the second cycle, wherein at least one of displacement, dwell duration or timing, or velocity of the working region motion varies from the first cycle to the second cycle.

13. The method of claim 11 further comprising the steps of:
intermittently positioning portions of the continuously moving line within the working region adjacent to a plurality of work stations; and
dynamically adjusting movement of the slider assembly so that subsequent portions of the continuously moving line are positioned adjacent to less than all of the work stations.

## Patentansprüche

1. Vorrichtung zum Erzeugen von Relativbewegungen (10), um eine nominelle Bewegung eines Arbeitsbereichs (16) auf einem sich stetig bewegenden Band (11) dynamisch zu ändern, wobei die Vorrichtung zum Erzeugen von Relativbewegungen (10) aufweist:
eine entlang eines Verschiebungswegs (18) bewegliche Schieberanordnung (10A) ;
ein auf der Schieberanordnung (10A) angeordnetes erstes Trägerelement (13), das geeignet ist, den Arbeitsbereich (16) des sich stetig bewegenden Bands (11) zu unterstützen;
ein auf die Schieberanordnung (10A) angeordnetes zweites Trägerelement (14), das geeignet ist, den Arbeitsbereich (16) des sich stetig bewegenden Bands (11) zu unterstützen; und **dadurch gekennzeichnet, daß** die Erzeugungsvorrichtung (10) ferner aufweist:
ein Positionierungssystem, das die Schiebergeschwiridigkeit ansprechend auf ein Signal, das entweder eine Position auf dem kontinuierlichen Band und/oder eine Fehlfunktion einer Arbeitsstation darstellt, einstellt, wobei das Positionierungssystem ein programmierbares Aktuatorsystem (40) aufweist, das geeignet ist, die Schieberanordnung (10A) entlang des Verschiebungswegs (18) zu bewegen, um eine Arbeitsbereichbewegung, die sich von der nominellen Bewegung unterscheidet, und eine Arbeitsbereichbewegung zu erzeugen, die die gleiche wie eine nominelle Bewegung ist, wenn die Schieberanordnung (10A) relativ zu einem festen Ort (17) stationär ist.

2. Vorrichtung zum Erzeugen von Relativbewegungen nach Anspruch 1, wobei die Arbeitsbereichbewegung mindestens entweder eine Arbeitsbereichverlagerung, eine Geschwindigkeit oder eine Beschleunigung aufweist.

3. Vorrichtung zum Erzeugen von Relativbewegungen nach Anspruch 1, wobei die Arbeitsbereichbewegung mindestens entweder eine Arbeitsbereichverlagerung, eine Geschwindigkeit oder eine Beschleunigung aufweist, die jeweils nicht gleich einer nominellen Bandverlagerung, Geschwindigkeit oder Beschleunigung ist, wenn sich die Schieberanordnung bewegt.

4. Vorrichtung zum Erzeugen von Relativbewegungen nach Anspruch 1, wobei sich mindestens entweder eine Arbeitsbereichverlagerung, eine Geschwindigkeit oder eine Beschleunigung zwischen mindestens zwei Umläufen ändert und wobei eine Hin- und Herbewegung der Schieberanordnung einen Zyklus aufweist.

5. Vorrichtung zum Erzeugen von Relativbewegungen nach Anspruch 4, wobei die Arbeitsbereichbewegung eine Aufenthaltszeit aufweist.

6. Vorrichtung zum Erzeugen von Relativbewegungen nach Anspruch 1, wobei die Arbeitsbereichbewegung relativ zu dem festen Ort während eines ersten Abschnitts der Verschiebung der Schieberanordnung im wesentlichen null ist.

7. Vorrichtung zum Erzeugen von Relativbewegungen nach Anspruch 1, die ferner aufweist:
mindestens eine zu dem Arbeitsbereich benachbarte Arbeitsstation; und
eine Einrichtung zum Einstellen der Arbeitsbereichbewegung, so daß aufeinanderfolgende Abschnitte des sich stetig bewegenden Bands intermittierend benachbart zu der Arbeitsstation stationär sind.

8. Vorrichtung zum Erzeugen von Relativbewegungen nach Anspruch 1, die ferner aufweist:
Indexmarkierungen, die entweder auf dem sich stetig bewegenden Band oder Artikeln auf dem sich stetig bewegenden Band angeordnet sind;
einen Sensor, der geeignet ist, die Indexmarkierungen zu erfassen; und
ein Positionierungssystem mit geschlossenem Regelkreis zum dynamischen Einstellen der Schiebergeschwindigkeit ansprechend auf ein Signal von dem Sensor.

9. System zur Erzeugung von Relativbewegungen, das die Vorrichtung zum Erzeugen von Relativbewegungen nach Anspruch 1 und ein sich stetig bewegendes Band aufweist, welches mindestens entweder eine Bahn, ein Förderband, ein Teilehandhabungssystem oder einen Kettenantrieb aufweist.

10. Vorrichtung zum Erzeugen von Relativbewegungen nach Anspruch 1, wobei das Positionierungssystem geeignet ist, die Schieberanordnung unabhängig von der nominellen Bewegung entlang des Verschiebungswegs zu bewegen, so daß die Bewegung der Schieberanordnung entlang des Verschiebungswegs sich während mindestens zwei Zyklen unterscheiden kann, wobei eine Hin- und Herbewegung der Schieberanordnung einen Zyklus aufweist.

11. Verfahren zum dynamischen Ändern einer nominellen Bewegung eines Arbeitsbereichs eines sich stetig bewegenden Bands, welches die Vorrichtung zum Erzeugen von Relativbewegungen nach Anspruch 1 verwendet, das die folgenden Schritte aufweist:
Unterstützen des Arbeitsbereichs des sich stetig bewegenden Bands durch einen ersten und einen zweiten Träger, die auf einer Schieberanordnung angeordnet sind;
Bewegen der Schieberanordnung entlang eines Verschiebungswegs während eines ersten Zyklus, um eine Arbeitsbereichbewegung des Arbeitsbereichs zu erzeugen, die sich von der nominellen Bewegung des sich stetig bewegenden Bands unterscheidet, wobei die Hin- und Herbewegung der Schieberanordnung einen Zyklus aufweist; und
Stationär-Halten der Schieberanordnung relativ zu einem festen Ort, so daß die Arbeitsbereichbewegung die gleiche wie eine nominelle Bewegung ist.

12. Verfahren nach Anspruch 11, das ferner den Schritt periodisches Bewegen der Schieberanordnung entlang eines Verschiebungswegs während eines zweiten Zyklus aufweist, wobei der erste Zyklus sich von dem zweiten Zyklus unterscheidet, wobei mindestens entweder die Verlagerung, die Aufenthaltszeit oder Zeitsteuerung oder die Geschwindigkeit der Arbeitsbereichbewegung sich von dem ersten Zyklus zum zweiten Zyklus unterscheidet.

13. Verfahren nach Anspruch 11, das ferner die folgenden Schritte aufweist:
intermittierendes Positionieren von Abschnitten des sich stetig bewegenden Bands innerhalb des Arbeitsbereichs benachbart zu einer Vielzahl von Arbeitsstationen; und
dynamisches Einstellen der Bewegung der Schieberanordnung, so daß nachfolgende Abschnitte des sich stetig bewegenden Bands zu weniger als allen Arbeitsstationen benachbart positioniert werden.

## Revendications

1. Générateur de mouvement relatif (10) pour changer dynamiquement un mouvement nominal d'une région de travail (16) d'une ligne en mouvement continu (11), le générateur de mouvement relatif (10) comprenant :
un montage coulissant (10A) mobile le long d'un trajet en translation (18),
un premier élément de support (13) monté sur le montage coulissant (10A) adapté pour supporter la région de travail (16) de la ligne en mouvement continu (11),
un second élément de support (14) monté sur le montage coulissant (10A) adapté pour supporter la région de travail (16) de la ligne en mouvement continu (11), et
**caractérisé en ce que** le générateur (10) comprend en outre
un système de positionnement ajustant la vitesse du coulisseau en réponse à un signal représentant soit une position sur la ligne continue et/ou un disfonctionnement d'une station de travail, le système de positionnement comprenant un système d'actionneur programmable (40) adapté pour déplacer le montage coulissant (10A) le long du trajet en translation (18) pour générer un mouvement de région de travail différent du mouvement nominal et un mouvement de la région de travail identique à un mouvement nominal lorsque le montage coulissant (10A) est stationnaire par rapport à un emplacement fixé (17).

2. Générateur de mouvement relatif selon la revendication 1 dans lequel le mouvement de la région de travail comprend au moins un d'un déplacement d'une région de travail, d'une vitesse ou d'une accélération.

3. Générateur de mouvement relatif selon la revendication 1 dans lequel le mouvement de la région de travail comprend au moins un d'un déplacement d'une région de travail, d'une vitesse ou d'une accélération non égal, respectivement, au déplacement, à la vitesse ou à l'accélération nominale de la ligne, lorsque le montage coulissant se déplace.

4. Générateur de mouvement relatif selon la revendication 1 dans lequel au moins un d'un déplacement d'une région de travail, d'une vitesse ou d'une accélération varie entre au moins deux cycles et dans lequel un mouvement d'avant en arrière du montage coulissant comprend un cycle.

5. Générateur de mouvement relatif selon la revendication 4 dans lequel le mouvement de la région de travail comprend un temps de maintien.

6. Générateur de mouvement relatif selon la revendication 1 dans lequel le mouvement de la région de travail est essentiellement zéro par rapport à un endroit fixé pendant une première portion de translation du montage coulissant.

7. Générateur de mouvement relatif selon la revendication 1 comprenant en outre :
au moins une station de travail adjacente à la région de travail ; et
un moyen pour ajuster le mouvement de la région de travail de sorte que des portions séquentielles de la ligne en mouvement continu soient de manière intermittente adjacentes de façon stationnaire à la station de travail.

8. Générateur de mouvement relatif selon la revendication 1 comprenant en outre :
des marqueurs d'indexation situés sur un de la ligne se déplaçant en continu ou d'articles sur la ligne se déplaçant en continu ;
un capteur adapté pour détecter les marqueurs d'indexation ; et
un système de positionnement en boucle fermée pour ajuster dynamiquement la vitesse du coulisseau en réponse à un signal provenant du capteur.

9. Système de générateur de mouvement relatif comprenant le générateur de mouvement relatif selon la revendication 1 et une ligne se déplaçant en continu qui comprend au moins un d'un tissu, d'une bande convoyeuse, d'un système de manipulation de pièces, ou d'une commande de chaîne.

10. Générateur de mouvement relatif selon la revendication 1 dans lequel le système de positionnement est adapté pour déplacer le montage coulissant le long du trajet en translation indépendamment du mouvement nominal, de sorte que ce mouvement du montage coulissant le long du parcours de translation puisse être différent pendant au moins deux cycles, dans lequel un mouvement d'avant en arrière du montage coulissant comprend un cycle.

11. Procédé pour faire varier dynamiquement un mouvement nominal d'une région de travail d'une ligne en mouvement continu en utilisant le générateur de mouvement relatif selon la revendication 1, comprenant les étapes consistant à :
supporter la région de travail de la ligne se déplaçant en continu sur un premier et un second support montés sur un montage coulissant ;
déplacer le montage coulissant le long du trajet en translation pendant un premier cycle pour générer un mouvement de région de travail de la région de travail différent du mouvement nominal de la ligne se déplaçant en continu, dans lequel un mouvement d'avant en arrière du montage coulissant comprend un cycle ; et
maintenir stationnaire le montage coulissant par rapport à un emplacement fixé tel que le mouvement de la région de travail soit identique au mouvement nominal.

12. Procédé selon la revendication 11 comprenant en outre l'étape de cycler le montage coulissant le long du trajet de translation pendant un second cycle, le premier cycle étant différent du second cycle, dans lequel au moins un du déplacement, de la durée de maintien ou du temps, ou de la vitesse du mouvement de la région de travail varie entre le premier cycle et le second cycle.

13. Procédé selon la revendication 11 comprenant en outre les étapes consistant à :
positionner de manière intermittente des portions de la ligne en mouvement continu à l'intérieur de la région de travail adjacente à une multiplicité de stations de travail ; et
ajuster dynamiquement le mouvement du montage coulissant de sorte que des portions subséquentes de la ligne de travail en mouvement continu sont en position adjacente à moins de l'ensemble de toutes les stations de travail.
